# EUROPEAN PATENT SPECIFICATION

(11) **EP 3 588 208 B1**
(45) Date of publication and mention of the grant of the patent: **20.10.2021**
(21) Application number: 18757062.7
(22) Date of filing: 20.02.2018
(51) Int. Cl.: G05B 9/02, G05B 19/048, H02H 7/122, H02P 3/18

(54) **SERVO SYSTEM**
SERVOSYSTEM
SYSTÈME D'ASSERVISSEMENT

(30) Priority: 21.02.2017 JP 2017030156
(43) Date of publication of application: 01.01.2020
(73) Proprietor: Omron Corporation, Kyoto-shi, Kyoto 600-8530 (JP)
(72) Inventor: UEMURA, Takao, Kyoto-shi Kyoto 600-8530 (JP); HASHIMOTO, Minoru, Kyoto-shi Kyoto 600-8530 (JP); AKAGI, Tetsuya, Kyoto-shi Kyoto 600-8530 (JP); JIMBO, Ryuichi, Kyoto-shi Kyoto 600-8530 (JP)
(74) Representative: Becker & Kurig Partnerschaft Patentanwälte PartmbB
(86) International application number: PCT/JP2018/005956
(87) International publication number: WO 2018/155426

(56) References cited:
- EP-A2- 2 367 086
- EP-A2- 2 592 502
- WO-A1-2016/051552
- WO-A1-2016/116514
- JP-A- 2005 103 690
- JP-A- 2016 206 842
- JP-A- 2016 206 842
- JP-A- 2016 208 655
- US-A1- 2006 261 749

## Description

### TECHNICAL FIELD

The invention relates to a servo system, and more particularly to a safety driver capable of executing an STO function in the servo system.

### BACKGROUND ART

In a manufacturing site using a motor control system such as a servo system including a servomotor, it is an important issue to ensure the safety of the operator of a device. Concerning ensuring safety, in recent years, servo systems using a function known as safe torque off (STO) has started being put into use.

STO is a function conforming to the international standard IEC 61800-5-2 concerning safety requirements of variable speed electric drive systems, and prescribes, for ensuring the safety of workers, to monitor the behavior of the machine and stop the machine in a dangerous scenario. In particular, STO is expected to be applied to monitoring and controlling the position, velocity and torque of a servomotor as a driving source of a servo system.

When the STO function is executed in a servo system, based on a stop instruction signal, the drive signal used to drive the servomotor is electrically cut off, and the operation of the servomotor is stopped. For example, the STO function is preferably used in an emergency stop circuit of a device.

WO 2008/132975 A1 discloses that, in order to provide a power converter device including a safety stop circuit capable of cutting off a PWM signal without using a mechanical contact switch such as a contactor for an input or an output, in a safety stop circuit interposed between a gate drive circuit which drives an inverter part converting a direct current into an alternating current and a PWM generation circuit that generates a PWM signal supplied to the gate drive circuit, an external power cutoff terminal and a PWM signal cutoff circuit cutting off any of the PWM signals in conjunction with the external power cutoff terminal are configured, and a PWM signal to the gate drive circuit is cut off by cutting off with the PWM signal cutoff circuit when the external power cutoff terminal is in an open state.

JP 4336985 B discloses that, in a safety unit, in order to provide a verification system capable of reliably verifying the reliability of a configuration, the configuration data downloaded to the safety unit side is uploaded to the personal computer side again, the uploaded configuration data is collated with the original configuration data before the download, and the collation result is displayed on the screen of the personal computer. A user confirmation mark is displayed on the screen of the personal computer after the user performs a predetermined confirmation operation.

EP 2592502 A2 discloses a safety control system in which an a-contact of a relay is electrically connected between a feedback output terminal and a feedback input terminal of a safety controller, a b-contact of the relay is electrically connected between a signal output terminal of the safety controller and a signal input terminal of a safety drive circuit, and a coil of the relay is connected to a feedback monitor output terminal of the safety drive circuit.

JP 2016206842 A discloses a control device comprising a safety calculation part, a safety encoder part, and a safety input/output part. The safety calculation part comprises CPUs having diagnosis processing parts for diagnosing whether a state is a serious failure state, a slight failure state, or a safe state, collation processing parts for collating a result of the diagnosis, and a determination part for outputting a first safety stop signal for stopping a driven appliance if at least one of a position of a rotation axis and rotation speed is diagnosed as in the serious failure state. A safety operation is executed if it is determined as a diagnosis result that the position of the rotation axis or the rotation speed do not match. The safety encoder part has detection parts for detecting the position of the rotation axis or the rotation speed of the driven appliance. The safety input/output part outputs detection results of the detection parts to the safety calculation part, and outputs the first safety stop signal to a speed controller.

### SUMMARY

### [Problem to be Solved]

When the STO function is executed, the safety driver, as a forming component of the servo system, stops the drive device such as a servomotor. The safety driver is a device connected to the servomotor to perform standard control and safety control with respect to the servomotor. A wired method and a communication method are known as methods for inputting a stop instruction signal for executing the STO function to the safety driver.

In the wired method, when a safety controller directly connected with the safety driver by a control signal line detects a stop instruction (for example, pressing of an emergency stop switch) of the drive device by the operator, a stop instruction signal is output from the safety controller to the safety driver. In the communication method, a safety PLC connected with the safety driver via a communication line outputs the stop instruction signal to the safety driver in response to an input or a program of the operator.

The wired method has the advantage that, when an emergency occurs at the manufacturing site and the operator carries out a stop process, the response with respect to the instruction of the operator is favorable and the response speed is fast. On the other hand, the communication method has the advantage that a stop process from the PLC connected by the communication line can be performed, and the STO can be performed according to a remote operation.

As described above, the wired method and the communication method each have advantages. In addition, for the improvement in safety performance, it is favorable to implement multiple safety mechanisms. Therefore, it is favorable that the safety driver connected to a drive device is capable of executing the STO function in correspondence with both the stop instruction signal output from the safety controller and the stop instruction signal output from the safety communication unit. Conventionally, regarding the safety control of servo systems, the wired method has become popular earlier, while the popularity of the communication system is expected to spread from now on. Therefore, there is a demand for the safety driver having the wired STO function to have a communication STO function.

However, in the case of manufacturing a safety driver that is simply provided with the wired and communication STO functions, such as the case of simply adding the communication STO function to the existing safety driver that is only compatible with the wired method, the number of parts such as the safety stop circuit in the safety driver may increase, which leads to issues such as an increased manufacturing cost of the safety driver, a decreased space inside the device or an increased scale of the device, etc. In addition, when making a configuration change such as adding a function, it is usually necessary to stop the existing safety stop circuit before carrying out the change, and the device becomes not usable during this time. In addition, in the case of changing the configuration of the safety driver, a third-party inspection association (TUV) may need to re-certify the specification, which results in issues of cost and time.

The invention has been made in view of the above problems. The object of the invention is to provide a technique for realizing both the wired and communication STO functions in a servo system including a safety driver that has the STO function and is connected to the drive device.

### [Means for Solving the Problems]

In a safety driver of a servo system according to a first configuration of the invention, a stop instruction signal via a communication line and a stop instruction signal via a control signal line are input to a common safety stop circuit.

That is, the invention provides a servo system as defined in appended claim 1.

According to such a configuration, the stoppage of a servomotor according to the wired STO function and the stoppage of the servomotor according to the communication STO function are executed by the same safety stop circuit of the safety driver. For this reason, the increase in the number of parts can be suppressed, so the cost and the part instillation area can be reduced.

In the servo system of claim 1, the safety driver has a first EDM output part which detects a cutoff of the drive signal path by the safety stop circuit and outputs a first EDM signal to the safety controller indicating that the drive signal path is cut off. Thereby a state in which the safety stop circuit is activated and the servomotor is stopped can be notified to the outside of the safety driver.

In the servo system of claim 1, the safety communication unit includes a second EDM output part which outputs a second EDM signal to the safety controller in a case where the safety stop circuit is activated according to the first stop instruction signal output from the safety controller, and does not output the second EDM signal to the safety controller in a case where the safety stop circuit is activated according to the second stop instruction signal. Thereby in the case where the stop instruction signal is output from the safety controller, since the second EDM signal is output to the safety controller, the operator using a stop switch, etc., may recognize that a drive current to the servomotor is cut off. On the other hand, in the case where the stop instruction signal is output from the safety PLC, that is, in the case where the drive current is cut off not due to the safety controller, since the second EDM signal is not output to the safety controller, the operator can be prevented from misidentifying the cause of the current cutoff.

In the servo system of claim 1, a configuration in which the safety communication unit is configured as being able to be built in the safety driver, and in a state where the safety communication unit is built in the safety driver, the second EDM output part of the safety communication unit disables a function of the first EDM output part of the safety driver and replaces the function of the first EDM output part may be adopted.

According to such a configuration, in spite that the first EDM output part operates and the STO function is executed according to the stop instruction signal from the safety PLC, the EDM signal is not output to the safety controller, so the misidentification of the operator can be prevented.

The present invention is provided by the appended claims. The following disclosure serves a better understanding of the present invention.

### [Effect of Invention]

According to the invention, a technique for realizing both the wired and communication STO functions in the servo system including the safety driver that has the STO function and is connected to the drive device can be provided.

### BRIEF DESCRIPTION OF THE DRAWINGS

FIG. 1 is a schematic diagram illustrating a servo system according to Reference Example 1, which is not covered by the claimed invention but which serves to understand the invention .
FIG. 2 is a diagram illustrating a configuration of the servo system according to Reference Example 1.
FIG. 3 is a flowchart illustrating an operation of the servo system according to Reference Example 1.
FIG. 4 is a diagram illustrating a configuration of a servo system according to a modified reference example which is not covered by the claimed invention but which serves to understand the invention.
FIG. 5 is a diagram showing a configuration of a servo system according to Reference Example 2, which is not covered by the claimed invention but which serves to understand the invention, serving as a premise of the Embodiment of the invention.
FIG. 6 is a diagram illustrating a configuration of the servo system according to the Embodiment of the invention.

### DESCRIPTION OF THE EMBODIMENTS

### [Reference example 1, not covered by the claimed invention]

### (Outline of servo system)

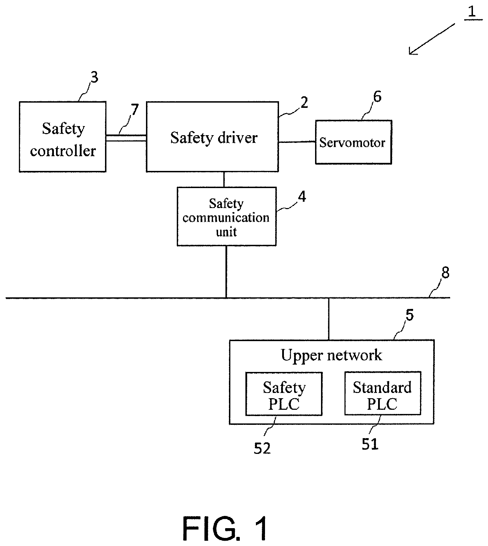

A schematic configuration of a servo system 1 according to Reference Example 1 of the disclosure is described with reference to FIG. 1.

The servo system 1 generally includes a safety driver 2, a safety controller 3, a safety communication unit 4, and a servomotor 6. The servo system 1 further includes, via a communication line 8, an upper network 5 including a safety PLC 52 and a standard PLC 51. As will be described later, the safety driver 2 and the safety communication unit 4 may be structurally integrated.

The servo system 1 is used for control of a machine which the servomotor 6 as a drive device is built in (for example, control of determining the position of a movable part in a machine tool).

### (Detailed configuration)

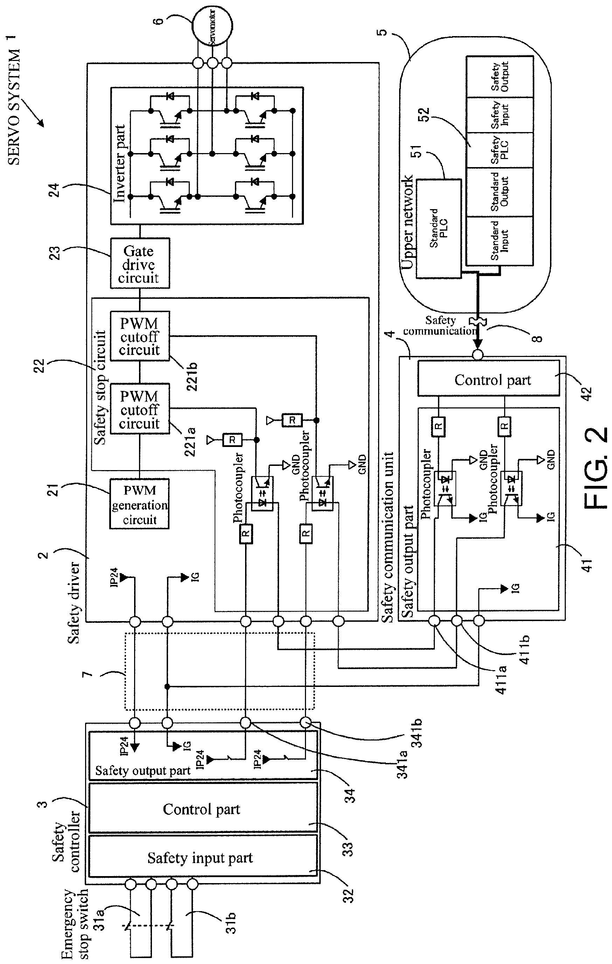

The configuration of the servo system 1 is described in greater detail with reference to FIG. 2.

The servo system 1 operates according to an action command of the standard PLC 51 (Standard PLC) and the safety PLC 52 (Safety PLC) included in the upper network 5.

The safety driver 2 performs standard control which a normal servo driver in a servo system performs and safety control including execution of an STO function.

In the standard control for the drive device such as the servomotor 6 to exert the normally expected ability, the safety driver 2 receives an action command signal, as an action command, relating to driving of the servomotor 6 from the standard PLC 51 via the communication line 8, and receives a feedback signal indicating the operation of the servomotor 6 from an encoder (not shown) of the servomotor 6. Then, the safety driver 2 calculates a command value relating to the operation of the servomotor 6 based on the action command signal from the standard PLC 51 and the feedback signal from the encoder, and supplies a drive current to the servomotor 6, so that the operation of the servomotor 6 follows the command value.

In the safety control for ensuring the safety of the drive device, the safety driver 2 receives the safety command signal transmitted from the safety PLC 52 via the communication line 8 through the safety communication unit 4. The safety command signal at least includes a stop command signal for instructing the safety driver 2 to exert the STO function to stop the servomotor 6. The safety command signal may also include a monitoring command signal relating to monitoring on the occurrence of an abnormality in the servomotor 6 or the safety driver 2.

The safety driver 2 outputs information relating to the execution or monitoring result of the STO function to the safety PLC 52 via the communication line 8. As the safety driver 2, a servo driver or an inverter having a hard wire STO function is suitably used.

The safety driver 2 includes a PWM generation circuit 21 (drive signal generation circuit) that generates a drive signal supplied to the servomotor 6 based on a received command as an action command from the standard PLC 51 at the time of the standard control. The generated drive signal (PWM signal) is output to the servomotor 6 via a drive signal path including a gate drive circuit 23 or an inverter part 24, etc. which the servo driver normally includes. Specifically, the safety driver 2 supplies the drive current to the servomotor 6 so that the operation of the servomotor 6 follows the value of the action command. As the supply current, it is preferable to use AC power transmitted from an AC power source with respect to the safety driver 2. The safety driver 2 may be any type such as a type that receives a three-phase alternating current or a type that receives a single-phase alternating current.

On the other hand, at the time of safety control, the safety driver 2 cuts off the drive signal transmitted on the drive signal path and stops the servomotor. The mechanism for this purpose is a safety stop circuit 22 including a PWM cutoff circuit 221 (221a, 221b). That is, when a stop instruction signal is input, the safety stop circuit 22 cuts off the drive signal by the PWM cutoff circuit 221 disposed in the drive signal path between the PWM generation circuit 21 and the servomotor 6. As a result, the drive of the servomotor 6 is stopped and the safety is ensured.

In this embodiment, from the viewpoint of fail-safe against circuit failure, the PWM cutoff circuit 221 is duplicated, so two PWM cutoff circuits (221a, 221b) are configured in parallel to cut off the drive signal path. Also, the stop instruction signal (first stop instruction signal) output from the safety controller 3 and the stop instruction signal (second stop instruction signal) output from the safety communication unit 4 are both duplicated, and each signal is received by a terminal on the stop signal input side, subjected to noise reduction by a photocoupler, and transmitted to the PWM cutoff circuit 221.

Further, as a characteristic configuration of the invention, the safety stop circuit 22 is shared by the safety communication unit 4 and the safety controller 3.

To control the servo system 1, the upper network 5 includes a program written in a ladder language or the like and a programmable logic controller (PLC) as a control device operating according to the operation of the operator. The upper network 5 of this embodiment includes the safety PLC 52 and the standard PLC 51. The standard PLC 51 has standard input/output which perform standard control for exerting a function that the drive device normally has. In addition, the safety PLC 52 has safety input/output that perform safety control for exerting the STO function. A PLC capable of executing both standard control and safety control may also be used.

The communication line 8 capable of realizing safety communication in which the speed and the accuracy of data communication are highly guaranteed is connected between the safety communication unit and the PLC. As safety communication, field networks having been used in manufacturing sites may be used. For example, Safety over EtherCAT (FSoE) using Ethernet for Control Automation Technology (EtherCAT, registered trademark) technology promoted by EtherCAT Technology Group (ETG) is suitably used.

The safety controller 3 is directly connected to the safety driver 2 via a control signal line 7, and this connection is also referred to as wired connection or hard wired connection.

The safety controller 3 includes an emergency stop switch 31 as an input part of a stop instruction which the operator in the vicinity of an emergency can use. The safety controller 3 also includes a safety input part 32 receiving an input of the operator, a control part 33 exerting control on the entirety, and a safety output part 34 outputting the stop instruction signal.

When the safety input part 32 detects that the emergency stop switch 31 is pressed by the operator, the control part generates the stop instruction signals in parallel for two systems (31a, 31b), and outputs the stop instruction signals from the safety output part 34 to the safety driver 2 via the control signal line 7. The wired connection between the safety output part 34 and the safety driver 2 is a high-speed connection method for directly connecting the two, and has a higher response speed than safety communication connection by the communication line 8. Therefore, in the case where the operator performs a stop process using the safety controller 3, the stop instruction signal can be transmitted with a limited time lag after the emergency stop switch 31 is pressed, and the cutoff of the drive current in the safety stop circuit 22 of the safety driver 2 is executed quickly.

Normally, the safety controller 3 is disposed in a vicinity of the drive device (or an apparatus including the drive device) at the manufacturing site. As the safety controller 3, for example, a stand-alone safety controller such as the G9SP series of OMRON, etc., is suitably used. The emergency stop switch 31 is an input part of the stop instruction used by the operator, and a mushroom-shaped switch or the like which the operator can press can be used. However, an input part other than a switch may also be used. In this embodiment, from the viewpoint of fail-safe, the output system from the emergency stop switch 31 and the safety output part 34 is duplicated. That is, when the emergency stop switch 31 is pressed, duplicated signals are output in parallel, and the signals are output from the safety output part 34 in two systems and the stop instruction signals are output from two wired stop signal output terminals (341a, 341b).

The safety communication unit 4 includes a safety output part 41 outputting a signal to the safety driver 2 and a control part 42 exerting control on the entirety, and performs safety communication with the upper network via the communication line 8. When the safety communication unit receives an instruction, such as an instruction for stopping the drive device by the STO function, from the safety PLC 52, the control part 42 determines whether the input via safety communication is valid or invalid, and generates the stop instruction signal when the input is determined as valid. The safety output part 41 outputs the generated stop instruction signal to the safety driver 2. From the viewpoint of fail-safe, the safety output part 41 of this embodiment performs two-system signal outputting from two communication stop signal output terminals (411a and 411b) with respect to one instruction from the safety PLC 52. The safety output part 41 includes photocouplers for insulating the signals and internal circuits.

The safety communication unit 4 may be configured as a substrate able to be built in the safety driver 2. In such case, the safety communication unit 4 is used integrally with the safety driver 2. As a built-in method, for example, a method in which the safety communication unit 4 is attached to a slot provided in a casing of the safety driver 2 is provided. Also, the safety communication unit 4 may be connected to the safety driver 2 and operate cooperatively to perform safety control. In FIG. 2, while the standard control command supplied from the standard PLC 51 to the safety driver 2 is omitted, the action command signal may also be input from the standard PLC 51 to the safety driver 2 via the communication line 8, and the safety communication unit 4 may also mediate for the standard control command. As the safety communication unit 4, a unit having an FSoE communication function and a safety output function is suitable.

The servomotor 6 is built in a mechanical device (for example, an arm of an industrial robot or a transport device), and operates the mechanical device based on the drive signal.

As the servomotor 6, for example, an AC servomotor can be used. In the servomotor 6, an encoder (not shown) which detects the operation of the servomotor 6 and generates the feedback signal and transmits the feedback signal to the safety driver 2 may be installed. The detected feedback signal includes, for example, positional information relating to a rotational position (angle) of a rotational axis of the servomotor 6 and rotational speed information of the rotational axis. Although the figure shows one servomotor 6, in reality, a plurality of servomotors or drive devices are driven by the safety driver 2 to operate cooperatively.

### (Processing flow)

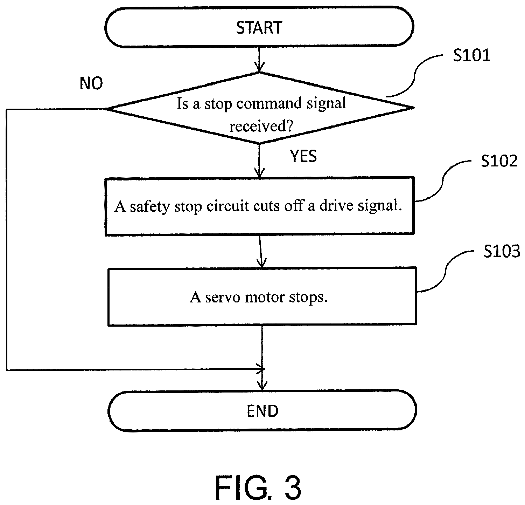

A processing flow when the safety driver 2 operates in this embodiment are described with reference to the flowchart of FIG. 3.

After the servo system 1 including the safety driver 2 is started by a start-up process at the manufacturing site, servo control is performed according to a sequence. During the time of performing the servo control, a process relating to the execution of the STO function shown in this flow is repeatedly executed in a predetermined cycle.

In the case where the safety stop circuit 22 receives the stop instruction signal in Step S101 (Step S101 = YES), the safety stop circuit 22 cuts off the drive signal in Step S102. That is, in the case where the stop instruction signals input to the safety stop circuit 22 are output from the wired stop signal output terminals (341a, 341b) of the safety controller 3, the terminals of the safety driver 2 receive the signals, and the signals are transmitted to the PWM cutoff circuits 221a and 221b, respectively, to execute the STO function. Also, in the case where the stop instruction signals are output from the communication stop signal output terminals (411a, 411b) of the safety communication unit 4, the terminals of the safety driver 2 receives the signals, and the signals are transmitted to the PWM cutoff circuits 221a and 221b, respectively, to execute the cutoff.

When the drive signal path is cut off, even if the PWM generation circuit 21 continues outputting the drive signal, the output of the torque by the servomotor 6 is stopped (Step S103). On the other hand, in the case where the stop instruction signal is not received in Step S101 (S101 = NO), the flow of this time is ended (END), and the next flow commences after a predetermined period has elapsed.

As described above, in the servo system 1 according to this embodiment, the stop instruction signal output from the safety controller 3 and the stop instruction signal output from the safety communication unit are both processed by the safety stop circuit 22 inside the safety driver 2 to execute the STO function. Therefore, the number of parts relating to the safety stop circuit 22 can be reduced, so the manufacturing cost of the device can be reduced or the unit can be miniaturized.

### [Modified reference example, not covered by the claimed invention]

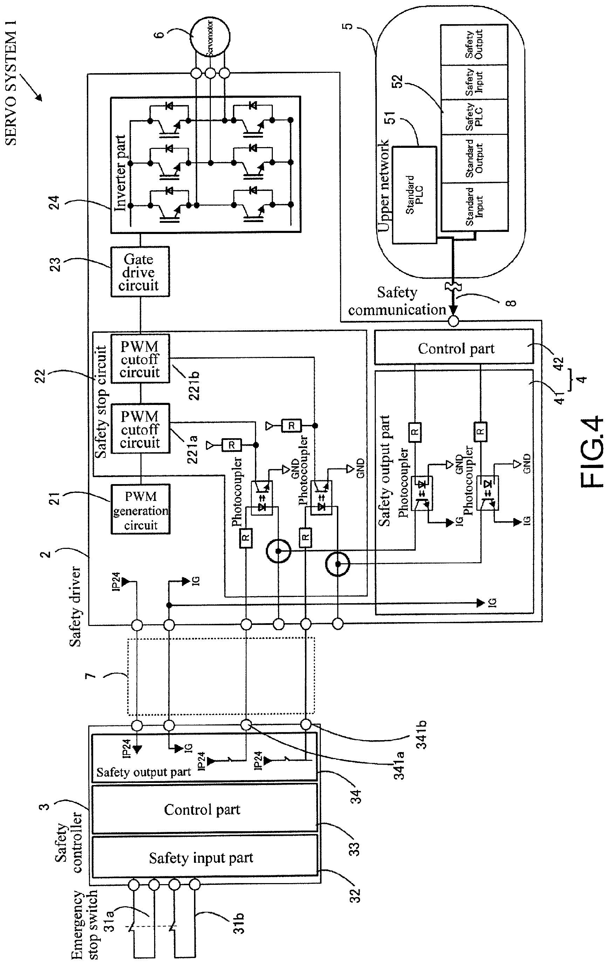

The servo system 1 according to a modified reference example of the Reference example 1 is described with reference to FIG. 4. The same components as in FIG. 2 are assigned the same reference numerals and detailed descriptions thereof are omitted.

This modified reference example features that the safety communication unit 4 is built in the safety driver 2 as an add-in and structurally integrated to constitute a safety communication part. For this reason, the stop instruction signal output from the safety output part 41 of the safety communication part is input to the safety stop circuit of the safety driver 2 via a wire inside the safety driver 2, instead of the communication stop signal output terminal 411.

As described above, there has been a demand for adding the communication STO function to the servo system 1 having the wired STO function that has become popular earlier. Therefore, according to the servo system 1 of this modified example, in the safety driver 2 which has been used conventionally, the communication STO function using the safety communication with the safety PLC 52 can be used by performing the add-on process such as adding a substrate and wiring. As a result, the safety of the servo system 1 can be easily enhanced without increasing the installation area of the device.

### [Reference Example 2, not covered by the claimed invention]

The servo system 1 according to Reference Example 2 of the disclosure is described with emphasis on its differences from Reference Example 1. Parts same as Reference Example 1 are assigned the same reference numerals to simplify the description.

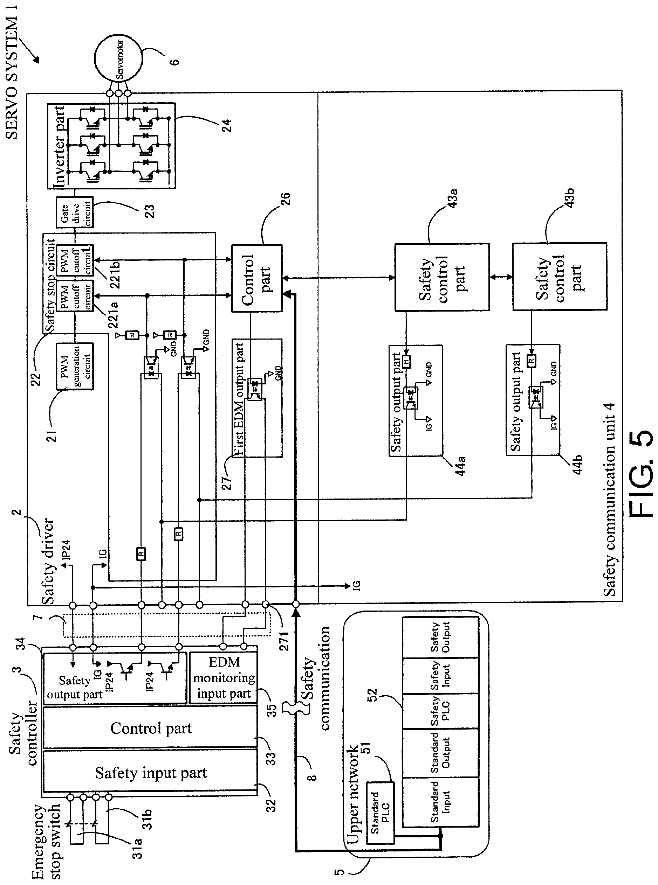

Firstly, as the premise, an external device monitoring (EDM) function of the safety driver 2 is described. In the servo system 1 shown in FIG. 5, the safety driver 2 includes an EDM output part 27. While the safety communication unit 4 of FIG. 5, like FIG. 4, is built in the safety driver 2 to constitute the safety communication part, the safety communication unit 4 same as that in FIG. 2 may also be used. Also, while duplicated safety control parts 43 (43a, 43b) and safety output parts 44 (44a, 44b) are provided in FIG. 5 to replace the control part 42 and the safety output part 41, the invention is not limited to this configuration.

The first EDM output part 27 of the safety driver 2 constantly monitors the safety output and functions as an external device monitor. That is, the first EDM output part 27 detects whether the drive signal path is cut off by the PWM cutoff circuit 221, and if the drive signal path is cut off, the first EDM output part 27 outputs an EDM signal from an EDM output terminal 271 to the safety controller 3.

The safety controller 3 of the figure includes an EDM monitoring input part 35 for receiving the EDM signal. When the EDM signal is input to the EDM monitoring input part, the control part 33 notifies that the drive signal path is in a cutoff state with a notification part such as a lamp. As a result, the control part can notify the operator of the cutoff state in the safety driver 2 to prompt an appropriate response such as an emergency response, a device reset process, etc.

Here, what is shown in FIG. 5 is one in which the EDM function is simply added to the servo system 1 of Reference Example 1. At this time, the cases where the STO function is executed according to the stop instruction signal (first stop instruction signal) from the safety controller 3 and the stop instruction signal (second stop instruction signal) from the safety communication unit 4, respectively, are considered.

Firstly, the case where the operator presses the emergency stop switch 31 of the safety controller 3, the stop instruction signal from the wired stop signal output terminal 341 is output, and the safety stop circuit 22 operates is considered. When the control part 26 constantly monitoring the drive signal detects the cut-off state in which the PWM cut-off circuit 221 cuts off the drive signal path, the EDM signal is output from the EDM output terminal 271 to the first EDM output part 27. Accordingly, the safety controller 3 can execute a necessary post-process.

On the other hand, in the case where the safety output part (44a, 44b) of the safety communication unit 4 outputs the stop instruction signal according to the command from the safety PLC 52 to operate the safety stop circuit 22, the control part 26 also detects the cutoff state and outputs the EDM signal from the first EM output part 27 to the safety controller 3. As a result, the safety controller 3 is notified that the drive signal path is in the cutoff state even though the emergency stop switch 31 is not pressed, so as to have an influence on a post-event response such as an investigation on the reason of stoppage by the operator, a reset of the device state, and a recovery process, etc.

### (Device configuration according to the Embodiment of the invention)

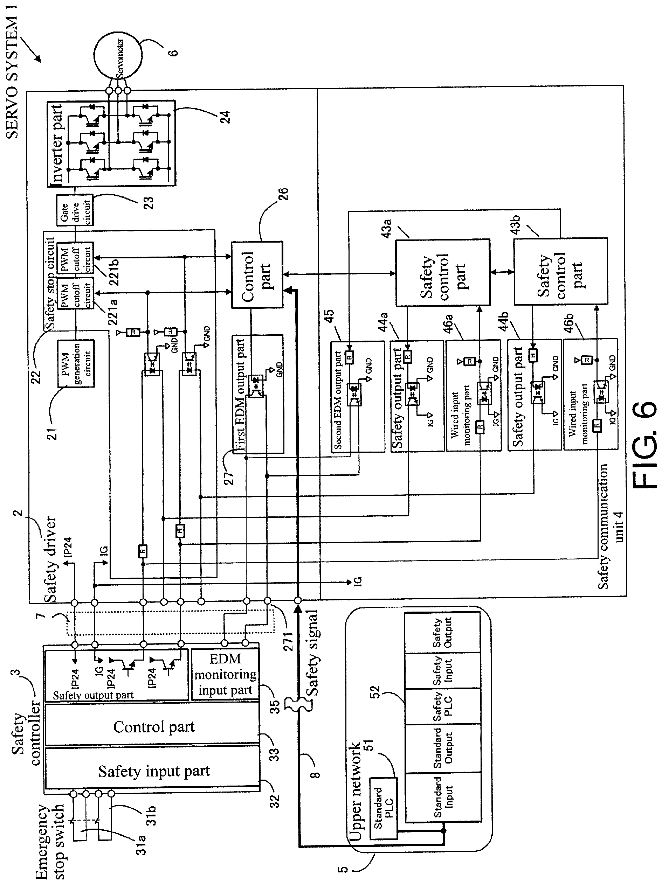

Based on the above issues, FIG. 6 illustrates the configuration of the servo system 1 in the Embodiment of the invention. The same components in the respective figures above are assigned the same reference numerals and detailed descriptions thereof are omitted.

The safety communication unit 4 shown in FIG. 6 includes a second EDM output part 45. The safety communication unit 4 also includes two wired input monitoring parts (46a, 46b) respectively corresponding to the safety control parts (43a, 43b) of the two systems.

In such a configuration, when the safety communication unit 4 is built in the safety driver 2, the second EDM output part 45 disables the function of the first EDM output part 27 and takes over the function thereof. That is, conventionally, the first EDM output part 27 monitors whether the PWM cutoff circuit 221 is in the cutoff state via the control part 26, and outputs to the EDM monitoring input part 35 when confirming the cutoff state.

On the other hand, in the configuration of FIG. 6, the wired input monitoring parts 46a and 46b of the safety communication unit 4 monitor the stop instruction signals (first stop instruction signal) output from the safety output part of the safety controller 3 to the PWM cutoff circuits 221a and 221b, detect the output of the stop instruction signals in the case where the stop instruction signals are output, and output signals to the safety control parts 43a and 43b. Then, when recognizing that the drive signal path is in the cutoff state due to the safety output part of the safety controller 3 by the safety control parts 43a and 43b of the safety communication unit, the second EDM output part 45 replaces the first EDM output part 27 to output the EDM signal, and the EDM signal is input to the EDM monitoring input part 35 of the safety controller 3 via the EDM output terminal 271. Thus, in the configuration of FIG. 6, in the case where the STO function is executed according to the stop instruction signal from the safety controller 3, the EDM signal is output by the second EDM output part 45.

On the other hand, in the case where the STO function is executed according to the command from the safety PLC 52, the safety control parts 43a, 43b of the safety communication unit 4 determine the validity of the input to generate the stop instruction signal (second stop instruction signal), and the safety output parts 44a, 44b output the stop instruction signal. Therefore, in the case where the PWM cutoff circuit 221 is in the cutoff state, the safety control parts 43a and 43b obtains whether the stop instruction signal is output from either of the wired method and the communication method, and transmit, as needed, information relating to the cutoff state to the safety PLC 52.

As described above, in the servo system 1 having the EDM function according to this embodiment, in the case where the stop instruction signal is output from the safety controller 3, the EDM signal is output to the safety controller 3, and in the case where the stop instruction signal is output from the safety PLC 52 via the safety communication unit 4, the EDM signal is not output to the safety controller 3. Therefore, the operator can be properly notified of the cutoff state of the drive signal path.

### [Modified reference example, not according to the claimed invention]

In the above description, it is assumed that the first EDM output part 27 is present in the safety driver 2. However, with the second EDM output part 45 included in the safety communication unit 4 executing the EDM function as the premise, it may also be configured that the safety driver 2 does not include the first EDM output part 27. In this case, like in the above description, in the case where the safety communication unit 4 is built in the safety driver 2 (or connected to the safety driver 2), the second EDM output part 45 detects the cutoff state of the drive signal path and the output source of the stop instruction signal, and determines the output destination of the EDM signal.

According to the configuration of this modified reference example, the effects of reducing the number of parts in the safety driver 2 and the cost can be attained.

### [Description of Reference Numerals]

1: servo system; 2: safety driver; 21: PWM generation circuit (drive signal generation circuit); 22: safety stop circuit; 3: safety controller; 31: emergency stop switch (input part); 4: safety communication unit; 5: upper network; 51: standard PLC; 52: safety PLC.

## Claims

1. A servo system (1), comprising:
a safety driver (2), configured to be connected to a drive device and comprising:
a drive signal generation circuit (21) configured to generate a drive signal driving the drive device based on an action command from a standard programmable logic controller, PLC (51), via a communication line (8) and a feedback signal from the drive device,
a drive signal path configured to transmit the drive signal from the drive signal generation circuit (21) to the drive device, and
a safety stop circuit (22) configured to cut off the drive signal path when a stop instruction signal is input; and
a safety controller (3), configured to be directly connected with the safety driver (2) by a control signal line, to generate a first stop instruction signal in response to an input of an operator using an input part (31), and to output the first stop instruction signal to the safety stop circuit (22) of the safety driver (2), wherein
the safety driver (2) comprises a first external device monitoring, EDM, output part (27) configured to detect a cutoff of the drive signal path by the safety stop circuit (22) and to output a first EDM signal to the safety controller indicating that the drive signal path is cut off,
the servo system being **characterized by** further comprising a safety communication unit (4), configured to be connected with the safety driver (2) and the safety controller (3), to generate a second stop instruction signal in response to an instruction from a safety PLC (52) via the communication line, (8) and to output the second stop instruction signal to the safety stop circuit (22) of the safety driver (2), wherein
the safety communication unit (4) comprises a second EDM output part (45) configured to output a second EDM signal to the safety controller (3) in a case where the safety stop circuit (22) is activated according to the first stop instruction signal output from the safety controller (3), and not to output the second EDM signal to the safety controller (3) in a case where the safety stop circuit (22) is activated according to the second stop instruction signal.

2. The servo system (1) according to claim 1, wherein the safety communication unit (4) is configured as being able to be built in the safety driver (2), and
in a state where the safety communication unit (4) is built in the safety driver (2), the second EDM output part (45) of the safety communication unit (4) is configured to disable a function of the first EDM output part (27) of the safety driver (2) and to replace the function of the first EDM output part (27).

## Patentansprüche

1. Servosystem (1), umfassend:
einen Sicherheitstreiber (2), der so konfiguriert ist, dass er mit einer Antriebsvorrichtung verbunden werden kann, und umfasst:
eine Treibersignal-Erzeugungsschaltung (21), die konfiguriert ist, um ein Treibersignal, das die Antriebsvorrichtung antreibt, zu erzeugen, basierend auf einem Aktionsbefehl von einer Standard programmierbaren logischen Steuerung, PLC, (51) über eine Kommunikationsleitung (8) und einem Rückkopplungssignal von der Antriebsvorrichtung;
einen Antriebssignalpfad, der so konfiguriert ist, dass er das Antriebssignal von der Treibersignal-Erzeugungsschaltung (21) an die Antriebsvorrichtung überträgt, und
eine Sicherheitsstoppschaltung (22), die so konfiguriert ist, dass sie den Antriebssignalpfad unterbricht, wenn ein Stoppbefehlssignal eingegeben wird; und
eine Sicherheitssteuerung (3), die so konfiguriert ist, dass sie über eine Steuersignalleitung direkt mit dem Sicherheitstreiber (2) verbunden ist, um als Reaktion auf eine Eingabe eines Bedieners unter Verwendung eines Eingabeteils (31) ein erstes Stoppanweisungssignal zu erzeugen und das erste Stoppanweisungssignal an die Sicherheitsstoppschaltung (22) des Sicherheitstreibers (2) auszugeben, wobei
der Sicherheitstreiber (2) ein erstes externes Geräteüberwachungs-, EDM-, Ausgangsteil (27) umfasst, das so konfiguriert ist, dass es eine Unterbrechung des Antriebssignalpfads durch die Sicherheitsstoppschaltung (22) erfasst und ein erstes EDM-Signal an die Sicherheitssteuerung ausgibt, das anzeigt, dass der Antriebssignalpfad unterbrochen ist,
wobei das Servosystem **dadurch gekennzeichnet ist, dass** es ferner eine Sicherheitskommunikationseinheit (4) umfasst, die konfiguriert ist, um mit dem Sicherheitstreiber (2) und der Sicherheitssteuerung (3) verbunden zu werden, um ein zweites Stoppanweisungssignal in Reaktion auf eine Anweisung von einer Sicherheits-PLC (52) über die Kommunikationsleitung (8) zu erzeugen und das zweite Stoppanweisungssignal an die Sicherheitsstoppschaltung (22) des Sicherheitstreibers (2) auszugeben, wobei
die Sicherheitskommunikationseinheit (4) ein zweites EDM-Ausgangsteil (45) umfasst, das so konfiguriert ist, dass es ein zweites EDM-Signal an die Sicherheitssteuerung (3) in einem Fall ausgibt, in dem die Sicherheitsstoppschaltung (22) gemäß dem von der Sicherheitssteuerung (3) ausgegebenen ersten Stoppanweisungssignal aktiviert wird, und das zweite EDM-Signal nicht an die Sicherheitssteuerung (3) ausgibt, in einem Fall in dem die Sicherheitsstoppschaltung (22) gemäß dem zweiten Stoppanweisungssignal aktiviert wird.

2. Servosystem (1) gemäß Anspruch 1, wobei die Sicherheitskommunikationseinheit (4) so konfiguriert ist, dass sie in den Sicherheitstreiber (2) eingebaut werden kann, und
in einem Zustand, in dem die Sicherheitskommunikationseinheit (4) in den Sicherheitstreiber (2) eingebaut ist, das zweite EDM-Ausgangsteil (45) der Sicherheitskommunikationseinheit (4) konfiguriert ist, um eine Funktion des ersten EDM-Ausgangsteils (27) des Sicherheitstreibers (2) zu deaktivieren und die Funktion des ersten EDM-Ausgangsteils (27) zu ersetzen.

## Revendications

1. Système de servocommande (1), comprenant :
un pilote de sécurité (2), configuré pour être relié à un dispositif d'entraînement et comprenant :
un circuit de génération de signal d'entraînement (21) configuré pour générer un signal d'entraînement entraînant le dispositif d'entraînement sur la base d'une commande d'action provenant d'un automate programmable, PLC, standard (51), via une ligne de communication (8) et d'un signal de rétroaction provenant du dispositif d'entraînement,
une voie de signal d'entraînement configurée pour transmettre le signal d'entraînement depuis le circuit de génération de signal d'entraînement (21) au dispositif d'entraînement, et
un circuit d'arrêt de sécurité (22) configuré pour couper la voie de signal d'entraînement lorsqu'un signal d'instruction d'arrêt est entré ; et
un dispositif de commande de sécurité (3), configuré pour être relié directement au pilote de sécurité (2) par une ligne de signal de commande, pour générer un premier signal d'instruction d'arrêt en réponse à une entrée d'un opérateur en utilisant une partie d'entrée (31), et pour délivrer le premier signal d'instruction d'arrêt au circuit d'arrêt de sécurité (22) du pilote de sécurité (2), dans lequel
le pilote de sécurité (2) comprend une première partie de sortie de surveillance de dispositif externe, EDM, (27) configurée pour détecter une coupure de la voie de signal d'entraînement par le circuit d'arrêt de sécurité (22) et pour délivrer un premier signal EDM au dispositif de commande de sécurité indiquant que la voie de signal d'entraînement est coupée,
le système de servocommande étant **caractérisé en ce qu'**il comprend en outre une unité de communication de sécurité (4), configurée pour être reliée au pilote de sécurité (2) et au dispositif de commande de sécurité (3), pour générer un deuxième signal d'instruction d'arrêt en réponse à une instruction provenant de l'automate programmable de sécurité (52) via la ligne de communication (8), et pour délivrer le deuxième signal d'instruction d'arrêt au circuit d'arrêt de sécurité (22) du pilote de sécurité (2), dans lequel l'unité de communication de sécurité (4) comprend une deuxième partie de sortie EDM (45) configurée pour délivrer un deuxième signal EDM au dispositif de commande de sécurité (3) dans un cas où le circuit d'arrêt de sécurité (22) est activé en fonction du premier signal d'instruction d'arrêt délivré depuis le dispositif de commande de sécurité (3) et pour ne pas délivrer le deuxième signal EDM au dispositif de commande de sécurité (3) dans un cas où le circuit d'arrêt de sécurité (22) est activé en fonction du deuxième signal d'instruction d'arrêt.

2. Système de servocommande (1) selon la revendication 1, dans lequel l'unité de communication de sécurité (4) est configurée comme étant apte à être construite dans le pilote de sécurité (2), et
dans un état où l'unité de communication de sécurité (4) est construite dans le pilote de sécurité (2), la deuxième partie de sortie EDM (45) de l'unité de communication de sécurité (4) est configurée pour désactiver une fonction de la première partie de sortie EDM (27) du pilote de sécurité (2) et pour remplacer la fonction de la première partie de sortie EDM (27).
